(19) Europäisches Patentamt
European Patent Office
Office européen des brevets

(11) **EP 0 452 374 B1**

(12) **EUROPEAN PATENT SPECIFICATION**

(45) Date of publication and mention
of the grant of the patent:
**04.12.1996 Bulletin 1996/49**

(21) Application number: **90901523.2**

(22) Date of filing: **09.01.1990**

(51) Int Cl.6: **F16K 17/20**, **F16K 41/10**

(86) International application number:
**PCT/CA90/00012**

(87) International publication number:
**WO 90/08279 (26.07.1990 Gazette 1990/17)**

(54) **UNIVERSAL CONTROL VALVE**

UNIVERSELLES STEUERVENTIL

VANNE DE COMMANDE UNIVERSELLE

(84) Designated Contracting States:
**AT BE CH DE DK ES FR GB IT LI LU NL SE**

(30) Priority: **10.01.1989 YU 34/89**

(43) Date of publication of application:
**23.10.1991 Bulletin 1991/43**

(73) Proprietor: **URO NOVA TECHNOLOGIES INC.**
**Burnaby, British Columbia V6B 2Y3 (CA)**

(72) Inventor: **NOVAKOVIC, Milic**
**YU-47220 Vojnic (YU)**

(74) Representative:
**Cheyne, John Robert Alexander Mackenzie et al**
**HASELTINE LAKE & CO.**
**Hazlitt House**
**28, Southampton Buildings**
**Chancery Lane**
**London WC2A 1AT (GB)**

(56) References cited:
WO-A-88/06694          DE-A- 2 406 879
US-A- 2 427 441          US-A- 4 132 237

## Description

This invention relates to mechanical engineering devices, more specifically to the field of valves, i.e. safety valves which react on occurrence of a subpressure or insufficient pressure. According to the IPC this invention bears the denotation F16K 17/02.

The technical problem being solved by this invention is how to construct a universal control valve which would protect the user from uncontrolled fluid outflow by means of repeated fluid flow in distribution installations after eliminating the cause of flow stoppage. When non-corrosive fluids are involved, such as water in supply tubes, it is necessary to limit the maximum required capacity and also to prevent scale sedimentation, as well as to reduce to a minimum or completely avoid hydraulic blast or hammer. In addition, if necessary, the valve can act as a vacuum valve.

The most up-to-date solution in the field of safety valves is the patent WO 88/06694 (PCT/CH88/0048) by the present author. In this invention, the objective is the protection of installations through which the fluid is transported to end users and where supply stoppages often occur due to various reasons such as: tube cracking, installation survey, fluid delivery reduction, etc. The end users use the fluid by opening the valves or taps. If there is no fluid in the installation due to the reasons mentioned above, a number of users may forget to close the valve or tap. Letting the fluid into the installation again, it reaches the valves and taps. If the valves and taps are open, the fluid will flow out into the room. If water is the fluid in question, it will flood the room. If aggressive fluids, gases or acids are involved the consequences could be catastrophic damage. A protection valve, according to the mentioned patent, automatically shuts off the fluid flow at the occurrence of a pressure drop in the valve outlet opening. Although the valve has solved the problem, testing has revealed a number of defects. After a few days the ring prevents functioning, because of scale sedimentation on the inside casing wall which prevents the piston from moving. The ring gap regulation is a big problem, because a small gap is hard to obtain without initiating hydraulic blast or hammer. When it is obtained, the ring tightens the piston too much, so that it cannot move. Another problem is the valve instability which appears on the differential surfaces between the upper piston and the seat. However, that is partly solved within the invention embodiment wherein the effective bellows surface is 70% less than the upper seat surface. However, the system instability remains, because the regulation characteristics, which regulation is connected to the spring by means of a screw, is directly related to the intake pressure at the valve entrance.

According to a first aspect of the present invention there is provided a control valve having: a casing means having an inlet port, an outlet port and an opening having a nominal opening area bordered by a seat and being disposed between the inlet and outlet ports to provide communication therebetween; a main valve member or valve plate mounted for movement between an open position clear of the seat and a closed position against the seat; a resilient means for urging the main valve member towards the closed position thereof; an equalizing chamber being disposed between the valve seat and the outlet port; the casing means having nozzle or channel means disposed so as to provide limited communication between the inlet port and the equalizing chamber when the valve member is held against the seat to close the valve; a flexible bellows extending between the valve member and the casing means on a side of the valve member remote from the seat, the bellows being sealed at opposite ends thereof to the valve member and to the casing means respectively to provide a bellows chamber, the valve being characterized by:

(a) a flexible diaphragm secured to the casing means, the diaphragm and the casing means providing a control chamber and a pressure chamber on opposite sides of the diaphragm, the pressure chamber being exposed to pressure at the inlet port, the main valve member being mounted on the diaphragm for movement therewith between the open and closed positions of the valve, the diaphragm having an orifice to provide limited communication between the control chamber and the pressure chamber, the orifice having a size sufficient to reduce fluid flow between the control chamber and the pressure chamber so as to reduce speed of movement of the diaphragm between the open and closed positions of the valve to reduce chances of hydraulic hammer,

(b) the bellows chamber enclosing an effective area of the diaphragm essentially equal to the size of the nominal opening area of the valve seat, so as to isolate an area of the diaphragm enclosed by the bellows from pressure within the control chamber on one side of the diaphragm, which area is essentially equal to an area of the opposite side of the diaphragm isolated by the valve seat from pressure at the inlet port, and

(c) a channel valve member cooperating with the nozzle or channel means to selectively open and close the nozzle or channel means as required.

According to a second aspect of the present invention there is provided a control valve having: a casing means having nozzle or channel means, an inlet port and an outlet port, the casing means also having an opening having a nominal opening area bordered by a seat and being disposed between the inlet and the outlet ports to provide communication therebetween; a main valve member or valve plate mounted for movement between an open position clear of the seat and a closed position against the seat; a resilient means for urging the valve member towards the closed position thereof;

an equalizing chamber being disposed between the valve seat and the outlet port; a flexible bellows extending between the valve member and the casing means on a side of the valve member remote from the seat, the bellows being sealed at opposite ends thereof to the valve member and to the casing means respectively to provide a bellows chamber, the valve being characterized by:

(a) a flexible diaphragm secured to the casing means to define, together with the casing means, a control chamber and a pressure chamber on opposite sides of the diaphragm, the pressure chamber being exposed to pressure at the inlet port, the main valve member being mounted on the diaphragm for movement therewith between the open and closed positions of the valve thereof, the diaphragm having an orifice to provide limited communication between the control chamber and the pressure chamber, the orifice having a size sufficient to reduce fluid flow between the control chamber and the pressure chamber so as to reduce speed of the diaphragm to reduce chances of hydraulic hammer,
(b) the bellows chamber having an effective bellows area defined by a closed envelope passing approximately midway between inner and outer convolutions of the bellows, the bellows chamber thus enclosing an effective area of the diaphragm essentially equal to the size of the nominal opening area bordered by the valve seat, so as to isolate a portion of the diaphragm enclosed by the bellows from pressure within the control chamber, and
(c) the nozzle or channel means of the casing means communicating the control chamber with the outlet port when the diaphragm is held against the valve seat to close the valve.

In an embodiment of the present invention a diaphragm is fixed between the lower and upper casing. In the upper wall of the lower casing there is a nominal opening which is bordered by a seat. A self-rinsing nozzle is installed beside it in the upper wall above the outtake port. A thickened part of the diaphragm, fixed between the plate and the diaphragm holder, is placed on the seat. The holder with leading or guiding elements is movably placed in the nominal opening and is fixed to a pulling rod by a screw. The pulling rod is encircled by a plate and is fixed to the stud. This stud is screwed into the upper part of the upper casing. A spring encircles the pulling rod and has one end against the stud, and with the other end it presses onto the plate. On the upper side of the plate, a plate-like chamber is formed with inside diameter equal to the nominal opening diameter. This chamber is bordered by a limiter and there is a bellows in it, hermetically fixed to the plate. The other end of the bellows is hermetically fixed to the middle part of the upper casing. Above the self-rinsing nozzle there is an orifice made in the diaphragm, so that a pressure chamber is formed between the lower casing diaphragm and another chamber, termed the control chamber, is formed between the diaphragm and the upper casing.

An indicator holder may be provided which is movably received in the valve stem and is fixed to the plate. In the lower casing next to the equalizing chamber, there is a horizontal orifice. Next to the pressure chamber, in the lower casing, there is a vertical orifice. The orifices open into a cylindrical chamber, in which a movably piston is received, encircled by a cap screwed into the upper casing. Under the cap, around the piston in the cylindrical chamber, a spring is placed. On its other end the piston is connected to a handle by means of a pin, and the handle is in the same way connected to the cap. Under the screw, in the upper casing around the spring, calibration spacers are set. The chamber is enclosed by the bellows. A limiter is fixed to the valve stem under the stud, and in the holes of the stud, the studs are mounted.

In another embodiment a solenoid valve is provided, which valve is connected to the horizontal and vertical channels in the lower casing.

In another embodiment channels are provided in the upper casing. The first channel starts in the control chamber. The second channel starts from the channel bored in the lower casing and is connected to the outlet opening. The other end of the first and second channels are connected to the solenoid valve.

In another embodiment, the ends of each channel bored in the upper casing is blocked with a respective plug. The first channel is by its other end connected to the effective space. The second channel is by its other end connected to the control chamber. The channels are linked to the three-way, two-position solenoid valve.

In another embodiment, a pulling rod is fixed to the plate.

The advantages of the control valve, according to this invention, compared to the existing valves, are in the fact that their noted defects have been eliminated and in that:

- the valve is able to automatically prevent overflows in case of water-supply pipe cracking;
- the valve is able to automatically stop the fluid flow in case of water-supply damage;
- the valve controls the flow in case of excessive consumption;
- the valve is able to automatically prevent the back flow of dirty water and water-supply pollution;
- the valve is able to automatically switch on after disappearance of disturbances;
- scale sedimentation does not effect its functioning;
- hydraulic blast does not appear;
- there is a possibility of valve adjusting;
- the valve allows the changes of pressure in the network;
- the valve is extremely simply designed;
- the valve can be used as a vacuum valve;
- the valve can be adjusted to shut off also when the fluid pressure falls below the minimum limit;
- the valve is reliable and has a long service life;
- the valve is easily installed;
- the valve can be placed into standard casings of well-known world producers;
- valve maintenance is easy.

For a better understanding of the present invention and to show more clearly how it may be carried into effect, reference will now be made, by way of example, to the accompanying drawings, in which:-

- Fig. 1 is a vertical section of the universal control valve;
- Fig. 2 represents forces and pressures on the effective bellows and diaphragm surfaces and lower plate seat surface;
- Fig. 3 represents the vertical section of the valve, according to the embodiment I, for stable fluid systems;
- Fig. 4 represents the lateral view of the valve from Fig. 3;
- Fig. 5a represents the vertical section of the valve, according to the embodiment II, when the valve is used as a shut-off valve with automatic by-pass activating by means of solenoid valve;
- Fig. 5b represents the vertical section along the A-A' section from Fig. 5a.
- Fig. 6 represents the vertical section of the valve, according to the embodiment III, with a solenoid valve mounted to the upper casing:
- Fig. 7 represents the valve, according to the embodiment IV, i.e. in control embodiment;

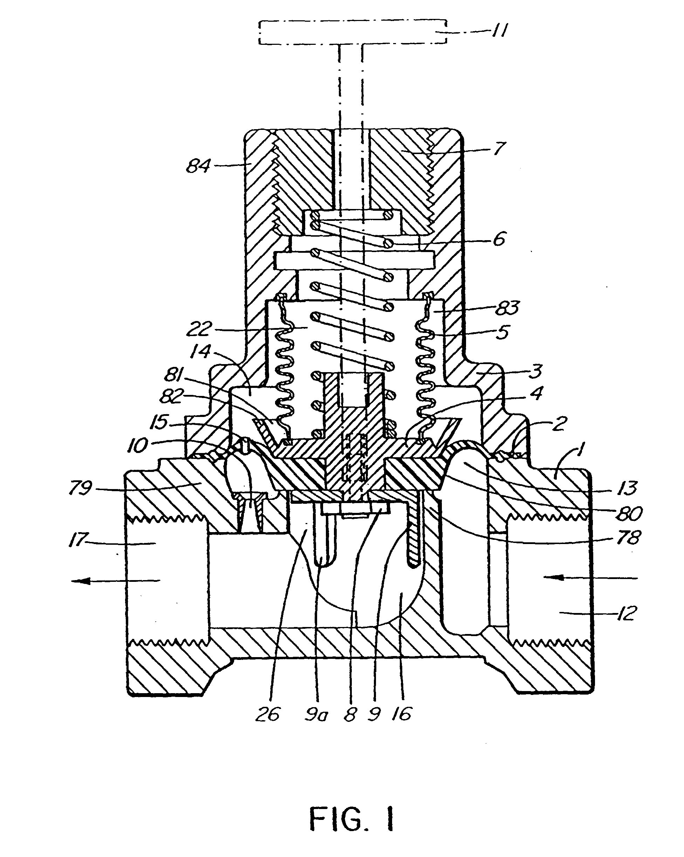

As it can be seen from Fig. 1, the universal control valve, according to this invention, introduces the diaphragm 2, fixed between lower casing 1 and upper casing 3. In the upper wall 79 of lower casing 1 there is a nominal opening or valve opening 26 having an area As bordered by a valve seat 78. The self-rinsing nozzle or channel means 10 is installed beside it in the upper wall 79 above the outtake or outlet port 17. The casings 1 and 3 provide casing means having an inlet port 12, the outlet port 17 and the opening 26 having the nominal opening area As. The opening 26 is bordered by the seat 78 and is disposed between the inlet and outlet ports to provide communication therebetween. The thickened part 80 of the diaphragm 2, fixed between the plate 4 and diaphragm 2, the holder 9 is placed on the seat 78. The holder 9 with leading or guiding elements 9a is movably placed in the nominal opening 26 and it is fixed to a pulling rod 11 by a screw 8. The pulling rod 11 is shown in broken outline as it is optional to the invention as will be described. The diaphragm 2 is secured to the casing means to define, together with the casing means, a control chamber 14 and a pressure chamber 13 on opposite sides of the diaphragm. The plate 4 and holder 9 serve as a diaphragm connector which is mounted on the diaphragm for movement therewith between an open position clear of the seat 78 and a closed position against the seat. It can be seen that the seat is disposed within the pressure chamber 13 and the control valve is Shown in the closed position with the diaphragm urged against the seat 78. The pulling rod 11 is encircled by the plate 4 and passes freely through a bore of a stud 7. The stud 7 is screwed into the upper part 84 of the upper casing 3. A spring 6 encircles the pulling rod 11 and has one end against the stud 7, and the other end it presses onto the plate 4. The spring 6 serves as a resilient means for urging the diaphragm to the closed position thereof as shown. On the upper side of the plate 4, a plate-like chamber 81 is formed with inside diameter equal to the nominal opening 26 diameter. This chamber 81 is bordered by a limiter 82 and there is a bellows 5 in it, hermetically fixed to the plate. The other end of the bellows 5 is hermetically fixed to the middle part 83 of the upper casing 3. The bellows 5 is flexible and extends between the diaphragm connector, that is the plate 4 and holder 9, and the casing means within the upper or control chamber 14 on a side of the diaphragm 2 remote from the seat 78. It can be seen that the bellows is sealed at opposite ends to the diaphragm connector and to the casing means to provide a bellows chamber 22 isolated from the control chamber 14 and enclosing an area Aef of the diaphragm generally equal to size of the nominal area As of the opening 26. This isolates a portion of the diaphragm 2 from pressure within the control chamber 14. Above the self-rinsing nozzle 10 there is an orifice 15 made in the diaphragm 2, so that pressure chamber 13 is formed between lower casing 1 and diaphragm 2, and the control chamber 14 is formed between diaphragm 2 and upper casing.

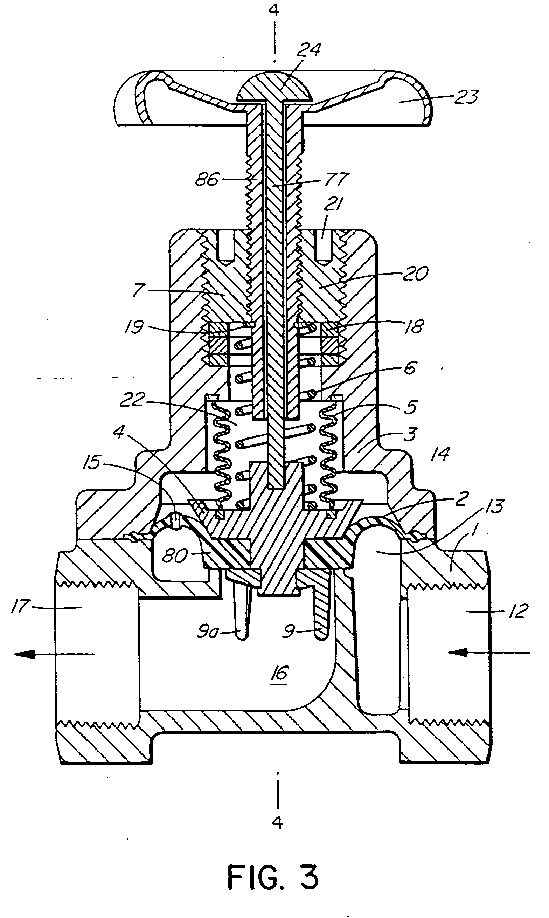

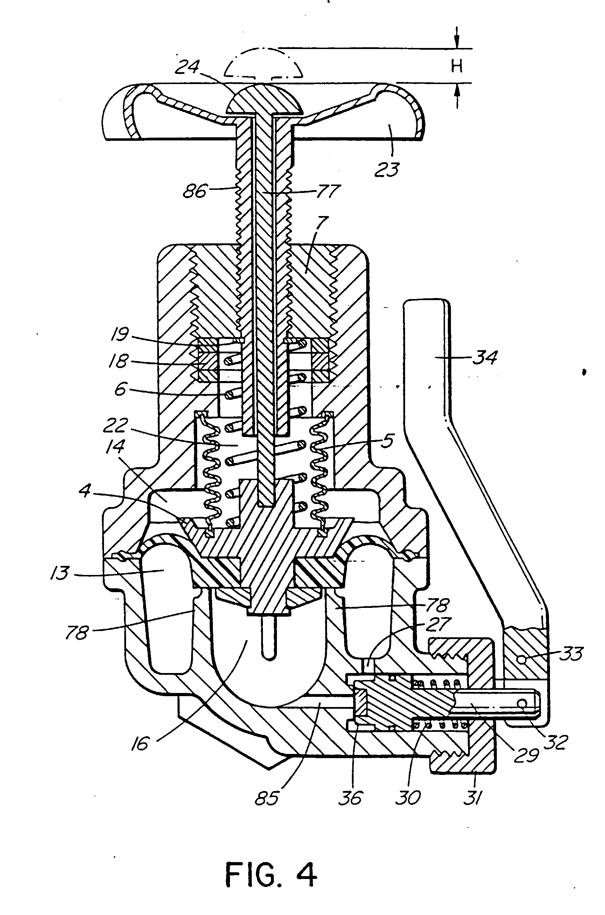

As it can be seen from Fig. 3 and Fig. 4, the invention concerning universal control valve, according to the embodiment I, is introducing a holder 77 of an indicator 24, movably pulled through the valve stem 86, and fixed to the plate 4. In the lower casing 1 next to the equalizing chamber 16, there is a horizontal orifice 85. Next to the pressure chamber, 13, in the lower casing, there is a vertical orifice 27. The orifices 85, 27 are generally equivalent to the nozzle 10 in function and serve as channel means which terminate in cylindrical chamber 36 in which a movably installed piston 29 is situated, encircled by a cap 31 screwed onto the lower casing 1. Under the cap 31 around the piston 29 in cylindrical chamber 36, a spring 30 is placed. On its other end the piston 29 is connected to a handle 34 by means of a pin 33, and the handle 34 is in the same way connected to the cap 29. Under the stud 7 in the upper casing 3 around the spring 6, the calibration spacers 18 are set. Chamber 22 is enclosed by the bellows 5. A limiter 19 is fixed to the valve stem 86 to limit upwards movement of the valve stem with respect to the stud 7, and in the holes 21 of the stud 7, the studs 20 are mounted. The valve stem is threaded within the stud 7, and has a handle 23 to permit manual rotation for moving the valve stem inwardly and outwardly with respect to the stud 7.

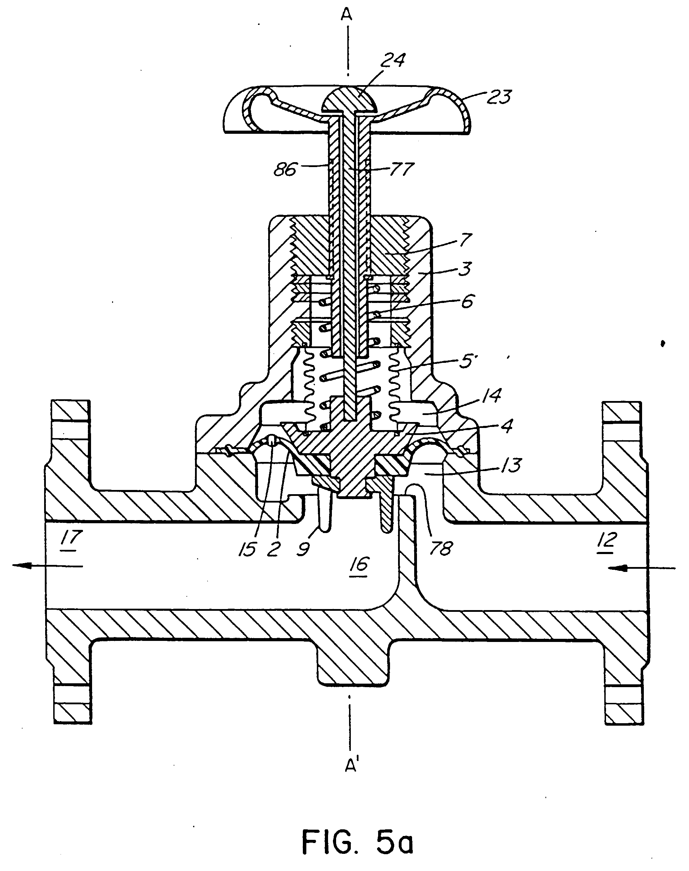

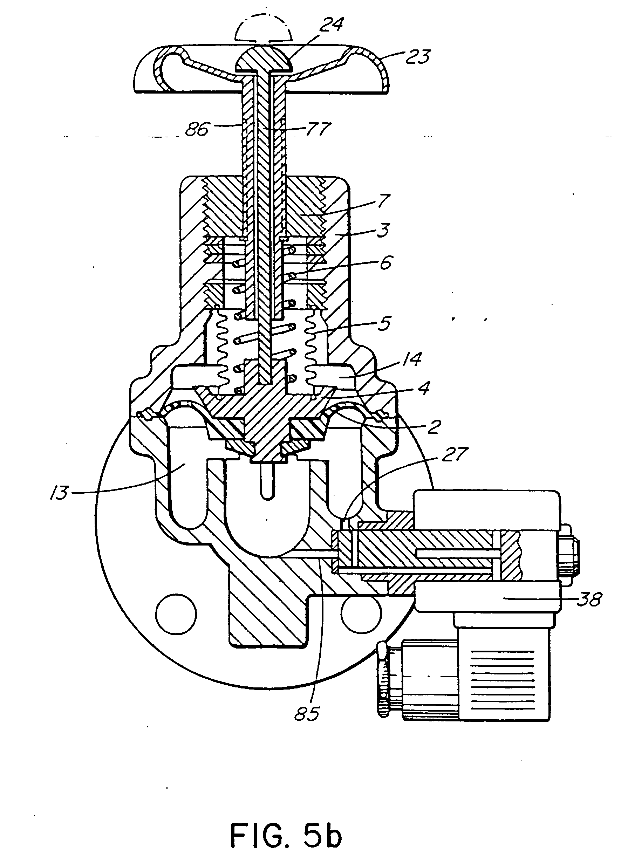

As it can be seen from Fig. 5a and Fig. 5b the invention concerning universal control valve, according to the embodiment II, is introducing the solenoid valve 38 to which the horizontal chamber or channel means 85 and vertical chamber or channel means 27 in the lower casing 3 are connected.

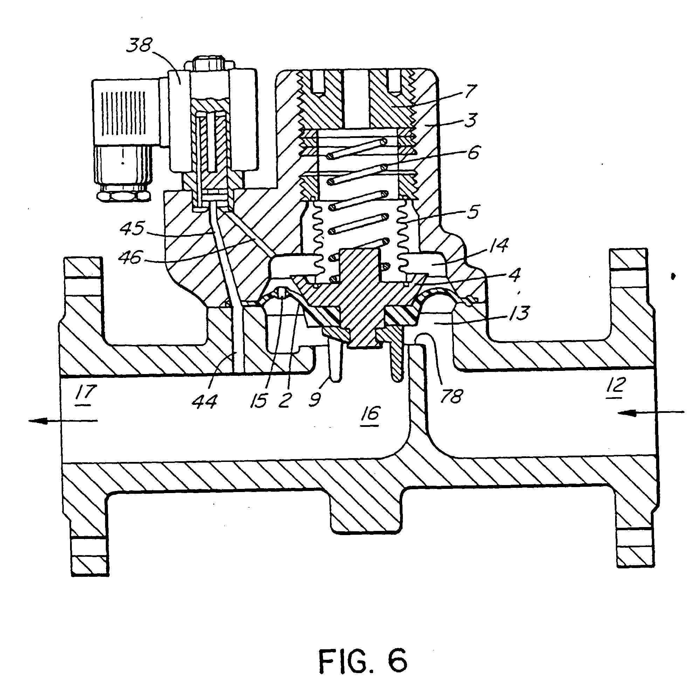

As it can be seen from Fig. 6, the invention concerning the universal control valve, according to the embodiment III, is introducing the channels 45 and 46 in the upper casing 42. The channel 46 begins in control chamber 14. The channel 45 begins from the channel 44, bored in lower casing 1 and connected to the outlet opening. The other ends of the channels 45 and 46 are connected to the solenoid valve 38.

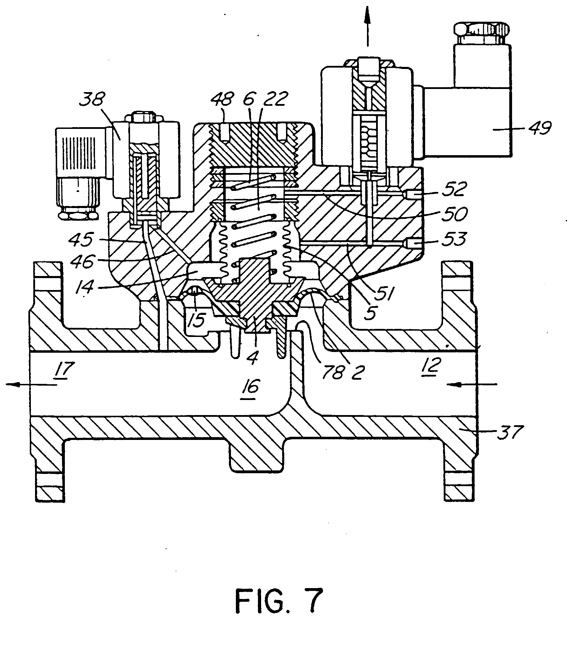

As it can be seen from Fig. 7, the invention concerning the universal control valve, according to the embodiment IV, is the following: the channels 50, 51 are bored in the upper casing 3 and at the end of each they are blocked with plugs 52, 53. Channel 50 is by its other end connected to the effective space or bellows chamber. The channel 51 is by its other end connected to control chamber 14. The channels 50, 51 are linked to the three-way, two-position (3/2) solenoid valve 49.

The universal control valve (Fig. 1) consists of lower casing 1, onto which the upper casing 3 is firmly seated and between which a diaphragm 2 is tightened. A nominal opening 26 is situated along the vertical axis inside the lower casing 1, with the chamber 16 for pressure equalizing. There is a seat 78 in the upper part of the nominal opening 26.

A self-rinsing nozzle 10 is placed in the upper wall 79 of the lower casing and between the outlet port 17 and the chamber 16. In the upper part 84 of the upper casing 3, a stud 7 is screwed in, pushing the spring 6 by its lower end. The spring 6 presses onto the plate 4 by its lower end. The thickened part 80 of diaphragm 2 is by the holder 9 with leading elements 9a and the screw 8 fixed to the lower part of the plate 4. Plate 4 has the plate-like chamber 81 on its upper side, bordered by limiter 82. Bellows 5 is connected firmly, i.e. hermetically and elastically to the middle inside part 83 of the upper casing 3 by its upper side.

The stud 7 adjusts the spring 6, to generate closing force onto the plate 4. Therefore, the plate 4, as long as there is no fluid pressure onto it, is permanently seated by its thickened part 80 of the diaphragm 2 on the seat 78 within the lower casing 1', preventing any fluid flow from the intake port 12 through the nominal opening 26 into the chamber 16, and therefrom into the outlet port 17.

By letting the fluid into the distributive water-supply installation, the fluid enters the pressure chamber 13 through the intake or inlet port 12 and applies pressure to the plate 4 and diaphragm 2 from below. Then the fluid passes through the orifice 15 in diaphragm 2 into the control chamber 14.

When the control chamber 14 is completely filled, fluid pressures on each side of the diaphragm 2 are equal and there is no additional differential force acting onto the plate 4.

$$Frez = Fiz - (Ff + Fb + Fo) = 0$$

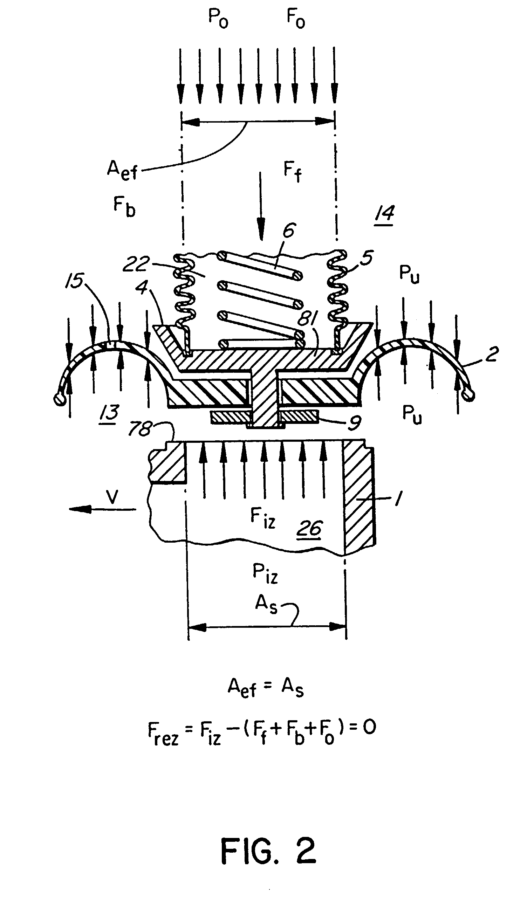

as shown on Fig. 2 where Aef is the effective bellows thrust surface, As is nominal opening area, Frez is the resultant force, f(Pu) is the intake pressure function, Fiz is the outlet pressure force, Ff is the spring pressure force, Fb is bellows pressing force and Fo is the atmospheric pressure force. The bellows chamber 22 is subjected to atmospheric pressure Po which is admitted through an upper portion of the bellows through the opening in the stud 7 which can receive the optional pulling rod 11. The bellows pressing force Fb results from compressible resilience in the bellows 5 which acts in concert with spring force Ff and is considered in the above equation.

In normal operation when the control valve is open, an outer annular portion of the lower surface of the diaphragm 2 is exposed to intake pressure Pu, as seen in Fig. 2. This intake pressure, via the orifice 15, enters the control chamber 14 and also acts on an outer annular portion of the upper surface of the diaphragm 2. Thus, the outer annular portion of the diaphragm 2 is balanced by equal pressures on opposite sides, but an inner portion of the upper surface of the diaphragm is isolated from the pressure within the control chamber by the bellows 5. The space 22 in the bellows is at atmospheric pressure Po and the forces Ff and Fb from the spring and the bellows respectively are insufficient to overcome the additional upwards force acting on the centre portion of the diaphragm due to the outlet pressure Fiz, and thus the control valve remains open. If a break occurs in the pipe downstream from the outlet port 17, the outlet pressure Fiz drops, and thus upwards force from the outlet pressure in the equalizing chamber 16 is reduced, whereas downward pressure in the control chamber 14 on the opposite side of the diaphragm remains very close to upward pressure Pu due to communication between the chambers 13 and 14 through the small orifice 15. Thus, the spring force Ff and the bellows force Fb move the diaphragm 2 slowly to the closed position. This feature facilitates very accurate selection of fluid flow through the control valve and therefore variations in inlet pressure do not effect flow through the valve.

It can be seen that the diaphragm 2 has the orifice 15 to provide limited communication between the control chamber 14 and the pressure chamber 13 and is of a size sufficient to reduce fluid flow into the control chamber 14 when outlet pressure in the outlet port 17 or equalizing chamber 16 drops. This reduces speed of closing of the diaphragm to reduce chances of hydraulic hammer.

The fluid simultaneously passes through self-rinsing orifice 10 into the chamber 16 and through the outtake port 17, and further on through the installation up to the valves and taps. If a valve or a tap is open, the fluid will flow out in an insignificant amount and it will drive the users' attention to closing the end valve or tap. It can be seen that the nozzle 10 serves as a channel means disposed so as to provide communication between the pressure chamber 13 and the outlet port 17 when the diaphragm 2 is held against the seat 78 to close the control valve. When the plate is in its lower position, the maximum pressure is ruling in the intake port 12, while the atmospheric pressure is ruling in the chamber 16. By closing the end valve or tap to prevent the fluid outflow, the pressure in the chamber 16 increases and equalizes with the intake port 12 pressure. The resultant force in the chamber 16 is bigger than the spring 6 force and the bellows 5 force, and by overcoming these forces, the plate 4 moves into its upper end position, and therefore enables the fluid flow. The lifting speed is very small, and it can be selected by the orifice 15 in diaphragm 2, so that the lifting occurs without a hydraulic blast. The described operation is performed concerning neutral fluid media, as well as in water-supply systems in unstable networks with frequent crackings, supply reductions, or situated on sliding terrains. e.g. unstable soil or overburden conditions.

When the outlet pipe fills up by flow through the orifice 10, the control valve opens automatically and thus flow is automatically initiated through the system. Loss of pressure in the outlet acts to close the valve automatically and thus flow is stopped automatically. The orifice 15 thus provides communication across the diaphragm for both opening and closing the valve at a controlled relatively slow rate. It can be seen that the orifice 15 serves to slow the rate of travel of the diaphragm as a result of pressure imbalances across the diaphragm 2. The orifice 15 has a size which is sufficiently small to permit a measure of flow therethrough at a rate commensurate with the size of the valve and the speed of opening or closing as required. For either valve opening or closing movement, the movement is sufficiently slow to prevent hydraulic hammer, but is sufficiently fast to serve the intended purpose. The control valve will tend to open at an outlet pressure that is very close to the outlet pressure at the time the control valve closes.

It is added that the optional pulling rod 11 can be used to move the diaphragm manually off the seat 78 to open the control valve to initiate flow through the valve without waiting for pressure to normally build up in the equalizing chamber 16 by the relatively slow flow through the orifice 10. Clearly, if there is a relatively long length of pipe from the outlet port 17 to the tap, it would take a long time for that length of pipe to fill up with the relatively small flow of liquid passing through the orifice 10. The advantage of the pulling rod 11 is that the control valve can be opened initially by manually pulling the rod 11 upwardly. It can be seen that the rod 11 has an inner end cooperating with the diaphragm connector, that is the plate 4 and holder 9, and an outer end having a handle means.

The universal control valve with a by-pass, according to the embodiment I of the invention, shown on Fig. 3 and Fig. 4 is used within the stable networks without pressure variations. In general, its functioning is similar to the previously described valve, except the following: Its reactivating is performed by means of a handle 34, connected as a two-arm lever by a pin 33. The lever moves the piston 29 overcoming the spring 30. This results by connecting the pressure chamber 13 and the equalizing chamber 16, pressure equalizing and lifting the plate 4. By means of the indicator 24, the valve position is exactly observed. This valve can be used as a shut-off valve, in the way that the handle 23 is screwed in until it presses down the plate 4 into the lower end position, and until the diaphragm lies onto the nominal opening 26 of the seat 78. When opening the valve, the handle 23 is being opened until it reaches the upper end position, i.e. until it reaches the limiter 19. In summary, it can be seen that the valve stem 86 has a central bore and is mounted for movement relative to the casing to cooperate with the diaphragm. The indicator rod 24 passes along the bore of the valve stem and has an inner end secured to the diaphragm connector, namely the plate 4 and holder 9, and an outer end extending outwardly of the valve stem so as to indicate position of the diaphragm 2 and to cooperate with the stem for outwards movement therewith when appropriate. It can be seen that the equalizing chamber 16,. which is at outlet pressure Piz, is disposed between the valve seat 78 and the outlet port 17, and the nozzle or channel means 27 and 85 extends from the equalizing chamber 16 to the pressure chamber 13. A valve member, such as the piston 29, cooperates with the nozzle or channel means 27 and 85 to open or close the nozzle or channel means as required, thus controlling flow between the equalizing chamber 16 and the pressure chamber 13. As seen in Fig. 4, a resilient means, such as a spring 30, cooperates with the valve member or piston 29 so as to urge the valve member 29 to a normally closed position, thus closing the nozzle or channel means 27 and 85. The manually actuated handle means 34 cooperates with the valve member 29 to overcome force from the resilient means or spring 30 so as to open the nozzle or channel means 27 and 85. The capacity adjusting is performed by chosing a certain number of calibration spacers 18. It usually occurs that after the water flow ceasing in the network, the taps remain open, and some of the users leave their hand-held shower head units immersed in water in filled-up bath-tubs expecting the water to come again. In such cases, the water supply system acts as a water pipe ans sucks in the dirty water with air from the bath-tub. This causes water pollution and the hydraulic blast, because of the air sucked-in. The control valve shown on Fig. 3 and Fig. 4 now acts as a vacuum valve. Thus, the valve has the capacity controller characteristics, it protects from flow ceasing or tube cracking, and it can be used as a shut-off valve or a vacuum valve.

The valve embodiments II and III, shown in Figs. 5a and 5b and Fig. 6 are used in industry. In this case, the solenoid valve controls the by-passing and can be operated remotely, in conjunction with a remote control indicator panel, if needed, showing position of the control valve. In Fig. 5b it can be seen that the solenoid valve 38 is a two-way, two-position valve which controls fluid communication between the equalizing chamber 16 and the pressure chamber 13, and thus is equivalent to the manually operated valve with the piston 30 in Fig. 4. In industrial applications, it is appropriate to manually open the control valve after a broken pipe has been repaired by manually unscrewing the handle, which, through the holder 77, simultaneously draws the diaphragm off its seat so as to open the control valve. Clearly, if the handle 23 remains in the raised position, in which the indicator 24 does not project beyond the handle 23, the control valve could no longer actuate automatically to close the valve if there was a drop in outlet pressure. Consequently, to ensure normal use of the valve after opening, the handle 23 is screwed inwardly again to a position which is sufficient to permit the valve to close automatically upon reduction of outlet pressure and would be clearly indicated by the indicator 24 projecting beyond the handle 23. It is added that, when the pipe has been repaired, the valve could be opened automatically and remotely by actuation of the valve 38 to open the control valve, and to permit fluid to flow once again into the pipe, through the channels 27 and 85, thus bypassing the closed diaphragm. Clearly, when the pipe is filled, outlet pressure Piz will act upon the diaphragm to open the valve as needed. However, if the pipe is long, it could take a while for fluid to flow into the pipe and thus re-opening the control valve remotely in this manner could be time consuming.

In Fig. 6, the channels 45 and 46 extend between the control chamber 14 and the- equalizing chamber 16 and flow through these channels is remotely controlled by the solenoid valve 38 in a similar manner. Thus, the channel means 45 and 46 provide communication between the control chamber 14 and the outlet port 17 when the diaphragm is held against the seat to close the control valve. In order to open the control valve after repair of a pipe fracture, the solenoid valve 38 is opened and this permits flow of fluid from the chamber 14 through the channels 46 and 45 into the outlet port 17. When the pressure in the outlet port 17 equals pressure in the inlet port 12, the spring force acting on the diaphragm is overcome, the diaphragm rises and the valve opens, permitting flow of fluid through the valve opening. Because the rate of flow of fluid into the outlet port is determined by size of the orifice 15 in the diaphragm, the equalisation of pressure in the inlet and outlet ports could take a far longer time than the time required for equalisation of pressure in the inlet and outlet ports of the embodiments of Figures 3 and 4, and Figures 5a and 5b. The embodiment of Figure 6 can be somewhat limited in some applications, but is appropriate where it is not possible to provide in the casing the channels 27 and 85 with the valve piston 29 of Figures 3 and 4, or the solenoid valve 38 of Figures 5a and 5b.

Fig. 7 shows the universal control valve embodiment IV, as applied in industry as a control valve. Through the solenoid valve 38 and the channels 45 and 46, a by-passing, i.e. opening is performed. Solenoid valve 49 is a three-way, two-position (3/2) type, so that its upper bore is in its neutral position, open end connected to chamber 22. When the solenoid valve is activated, the bores 50 and 51 are connected in the way that the fluid passes from chamber 14 into chamber 22, and the valve thus closes. It can be seen that the casing means has channel means 50 and 51 therein which are disposed so as to provide communication between the bellows chamber 22 within the bellows 5, and the control chamber 14. In contrast with other embodiments, the upper end of the bellows 5 does not communicate directly with atmosphere through the opening in the stud 48. Instead, the solenoid valve 49 cooperates with the channel means 50 and 51 so as to open and close the channel means 50 and 51 as required to provide the communication with atmosphere or the chambers 22 and 14 as required. Clearly, two ways or ports of the three-way valve are connected to the channel means 50 and 51, and the third way or port is connected to a sump or equivalent which is preferably exposed to atmosphere to exhaust fluid from the bellows when the control valve is moved from the closed to open position. Clearly, when the control valve is opened there is a decrease in volume of the bellows, and the displacement of fluid from the bellows passes to exhaust through the third way. When the solenoid valve 49 is opened, the bellows chamber 22 is exposed to atmospheric pressure and the control valve functions as previously described with reference to Fig. 6.

It can be seen that the valve 38 of Fig. 7 functions in a manner similar to the valve 38 of Fig. 6, and permits fast opening of the valve by exhausting fluid from the chamber 14 using supply pressure on a lower side of the diaphragm. In addition, the control valve of Fig. 7 can be remotely closed by actuating the solenoid valve 49 from its neutral position, in which the chamber 22 is exposed to atmosphere, to an activated position in which the channel means 50 and 51 are connected. When so connected, fluid passes from the chamber 14 into the chamber 22 and expands the diaphragm 22 downwardly, thus closing the control valve and rendering it impossible to open the control valve by actuating the solenoid value 38.

In summary, the several embodiments of the invention are described in order of increasing complexity and versatility for many applications. The control valve of Fig. 1 is the simplest valve and can only be closed automatically, and if the optional pulling rod 11 is not provided, it can only be opened automatically by drainage of fluid through the orifice 10. The control valve of Figs. 3 and 4 is closed automatically, and can be closed manually by screwing the handle 23, and can also be opened manually either by unscrewing the handle 23 or by actuating the manually actuated valve 30 to open the channels 27 and 85. The control valve of Figs. 5a and 5b can be closed automatically, and closed and opened manually, and also opened remotely by use of the solenoid valve 38, but this would only be appropriate where the speed of opening is not critical, or there is a relatively short length of pipe downstream from the control valve. The control valve of Fig. 6 is closed automatically and can be opened remotely and relatively quickly by actuation of the solenoid valve 38 which does not require the pipe downstream from the control valve to be filled. The control valve of Fig. 7 can similarly be opened remotely and relatively quickly similar to Fig. 6, and in addition can be closed remotely by use of the additional solenoid valve 49.

The testing of universal control valve, according to this invention, during a longer period in practice, has shown excellent results, and all the performance described make the invention worthy and easily acceptable for users.

## Claims

1. A control valve having: a casing means (1,3) having an inlet port (12), an outlet port (17) and an opening (26) having a nominal opening area ($A_s$) bordered by a seat (78) and being disposed between the inlet and outlet ports to provide communication therebetween; a main valve member or valve plate (4) mounted for movement between an open position clear of the seat (78) and a closed position against the seat; a resilient means (6) for urging the main valve member (4) towards the closed position thereof; an equalizing chamber (16) being disposed between the valve seat (78) and the outlet port (17); the casing means (1, 3) having nozzle or channel means (27, 85) disposed so as to provide limited communication between the inlet port (12) and the equalizing chamber (16) when the valve member (4) is held against the seat (78) to close the valve; a flexible bellows (5) extending between the valve member (4) and the casing means (1,3) on a side of the valve member (4) remote from the seat (78), the bellows being sealed at opposite ends thereof to the valve member (4) and to the casing means (1,3) respectively to provide a bellows chamber (22), the valve being characterized by:

    (a) a flexible diaphragm (2) secured to the casing means (1,3), the diaphragm and the casing means providing a control chamber (14) and a pressure chamber (13) on opposite sides of the diaphragm, the pressure chamber being exposed to pressure at the inlet port, the main value member (4) being a diaphragm connector (4, 9) mounted on the diaphragm (2) for movement therewith between the open and closed positions of the valve, the diaphragm (2) having an orifice (15) to provide limited communication between the control chamber (14) and the pressure chamber (13), the orifice (15) having a size sufficient to reduce fluid flow between the control chamber (14) and the pressure chamber (13) so as to reduce speed of movement of the diaphragm (2) between the open and closed positions of the valve to reduce chances of hydraulic hammer,

    (b) the bellows chamber (22) enclosing an effective area ($A_{ef}$) of the diaphragm (2) essentially equal to the size of the nominal opening area ($A_s$) of the valve seat, so as to isolate an area of the diaphragm enclosed by the bellows (5) from pressure within the control chamber (14) on one side of the diaphragm, which area is essentially equal to an area of the opposite side of the diaphragm isolated by the valve seat from pressure at the inlet port, and

    (c) a channel valve member (29, 38) cooperating with the nozzle or channel means (27, 85) to selectively open and close the nozzle or channel means as required.

2. A control valve as claimed in Claim 1, further characterized by:

    (a) a rod (11) having an inner end cooperating with the main valve member (4) and an outer end having a handle means, the rod cooperating with the casing means (1, 3) to move the diaphragm (2) relative to the seat (78), and

    (b) the resilient means (6) extending between the casing means and the main valve member (4) to urge the diaphragm (2) against the seat (78).

3. A control valve as claimed in Claim 1, further characterized by:

    (a) a valve stem (86) having a central bore and being mounted for movement relative to the casing to cooperate with the diaphragm (2), and

    (b) an indicator (24) passing along the bore of the valve stem (86) and having an inner end cooperating with the diaphragm (2) and an outer end extending outwardly of the valve stem (86), so as to indicate position of the diaphragm (2).

4. A control valve as claimed in Claim 1, further characterized by:

(a) a resilient means (30) cooperating with the channel valve member (29) so as to urge the channel valve member to a normally closed position, thus closing the nozzle or channel means (27, 85), and

(b) a manually actuated handle means (34) cooperating with the valve member (29) to overcome force from the resilient means (30) so as to open the nozzle or channel means (27, 85).

5. A control valve as claimed in Claim 1, further characterized by:
(a) an electrically actuated means (38) cooperating with the channel valve member (29) so as to move the channel valve member (29) between open and closed positions, thus opening and closing the nozzle or channel means (27, 85) as required.

6. A control valve as claimed in Claim 1, further characterized by:
(a) the chamber (22) within the bellows (5) being exposed to atmospheric pressure ($P_o$).

7. A control valve having: a casing means (1, 3) having nozzle or channel means (10; 27, 85; 45, 46), an inlet port (12) and an outlet port (17), the casing means also having an opening (26) having a nominal opening area ($A_s$) bordered by a seat (78) and being disposed between the inlet and outlet ports to provide communication therebetween; a main valve member or valve plate (4) mounted for movement between an open position clear of the seat (78) and a closed position against the seat; a resilient means (6) for urging the valve member (4) towards the closed position thereof; an equalizing chamber (16) being disposed between the valve seat (78) and the outlet port (17); a flexible bellows (5) extending between the valve member (4) and the casing means (1, 3) on a side of the valve member (4) remote from the seat (78), the bellows being sealed at opposite ends thereof to the valve member (4) and to the casing means (1, 3) respectively to provide a bellows chamber (22), the valve being characterized by:

(a) a flexible diaphragm (2) secured to the casing means (1, 3) to define, together with the casing means, a control chamber (14) and a pressure chamber (13) on opposite sides of the diaphragm, the pressure chamber being exposed to pressure at the inlet port (12), the main valve member (4) being a diaphragm connector (4, 9) mounted on the diaphragm (2) for movement therewith between the open and closed positions of the valve thereof, the diaphragm (2) having an orifice (15) to provide limited communication between the control chamber (14) and the pressure chamber (13), the orifice (15) having a size sufficient to reduce fluid flow between the control chamber (14) and the pressure chamber (13) so as to reduce speed of the diaphragm (2) to reduce chances of hydraulic hammer,

(b) the bellows chamber (22) having an effective bellows area ($A_{ef}$) defined by a closed envelope passing approximately midway between inner and outer convolutions of the bellows, the bellows chamber thus enclosing an effective area ($A_{ef}$) of the diaphragm essentially equal to the size of the nominal opening area ($A_s$) bordered by the valve seat (78), so as to isolate a portion of the diaphragm (2) enclosed by the bellows (5) from pressure within the control chamber (14), and

(c) the nozzle or channel means (10; 27, 85; 45, 46) of the casing means communicating the control chamber with the outlet port (17) when the diaphragm is held against the valve seat (78) to close the valve.

8. A control valve as claimed in claim 7, further characterized by:
(a) the nozzle or channel means (10, 27, 85) being disposed so as to provide communication between the pressure chamber (13) and the outlet port (17) when the diaphragm (2) is held against the seat (78) to close the valve, the control chamber (14) communicating with the pressure chamber (13) through the orifice (15).

9. A control valve as claimed in claim 8, further characterized by:

(a) an equalizing chamber (16) disposed between the valve seat (78) and the outlet port (17), the channel means (27, 85, 45, 46) communicating with the equalizing chamber,
(b) a channel valve member (29, 38) cooperating with the channel means to selectively open and close the channel means as required.

10. A control valve as claimed in Claim 7, further characterized by:

(a) a rod (11) having an inner end cooperating with the diaphragm (2) and an outer end having a handle means, the rod cooperating with the casing means (1, 3) to move the diaphragm (2) relative to the seat (78), and

(b) the resilient means (6) extending between the casing means and the diaphragm (2) to urge the diaphragm (2) against the seat (78).

11. A control valve as claimed in Claim 7, further characterized by:

(a) a valve stem (86) having a central bore and being mounted for movement relative to the casing to cooperate with the diaphragm (2), and

(b) an indicator (24) passing along the bore of the valve stem (86) and having an inner end secured to the diaphragm (2) and an outer end extending outwardly of the valve stem (86), so as to indicate position of the diaphragm (2).

12. A control valve as claimed in Claim 9, further characterized by:
(a) a manually actuated handle means (34) cooperating with the channel valve member (29) to move the channel valve member so as to open or close the nozzle or channel means (27, 85) as required.

13. A control valve as claimed in Claim 9, further characterized by:
(a) an electrically actuated means (38) cooperating with the channel valve member (29) so as to move the channel valve member (29) between open and closed positions, thus opening and closing the nozzle or channel means (27, 85) as required.

14. A control valve as claimed in Claim 7, further characterized by:
(a) the nozzle or channel means (45, 46) of the casing means (1, 3) being disposed so as to provide communication between the control chamber (14) and the outlet port (17) when the diaphragm is held against the seat (78) to close the valve.

15. A control valve as claimed in Claim 14, further characterized by:
(a) a channel valve member (38) cooperating with the channel means (45, 46) to open and close the channel means (45, 46) as required.

16. A control valve as claimed in Claim 7 or 14, further characterized by:

(a) the casing means (3) having channel means (50, 51) therein, the channel means being disposed so as to provide communication between the bellows chamber (22) within the bellows (5) and the control chamber (14), and

(b) a channel valve member (49) cooperating with the channel means (50, 51) so as to open and close the channel means (50, 51) as required and to control exposure of the bellows chamber (22) to atmosphere.

17. A control valve as claimed in Claim 16, further characterized by:
(a) the channel valve (49) is a three-way, two-position valve, the valve having one way connected to exhaust fluid, and the remaining two ways connected to the channel means (50, 51).

18. A control valve as claimed in Claim 7, further characterized by:
(a) the chamber (22) within the bellows (5) being exposed to atmospheric pressure ($P_o$).

**Patentansprüche**

1. Steuerventil mit

- einem Gehäuse (1, 3) mit einem Einlaß (12), einem Auslaß (17) und einer eine Nennöffnungsfläche ($A_s$) aufweisenden Öffnung (26), die von einem Sitz (78) begrenzt wird und zwischen dem Einlaß und dem Auslaß so angeordnet ist, daß sie diese miteinander verbindet,
- einem Haupt-Ventilkörper oder einer Ventilplatte (4), der bzw. die so angebracht ist, daß er bzw. sie zwischen einer Öffnungsstellung, in der er bzw. sie vom Sitz (78) gelöst ist, und einer Schließstellung, in der er bzw. sie am Sitz anliegt, hin- und herbewegbar ist,
- einem Federmittel (6), das dazu dient, den Haupt-Ventilkörper (4) in Schließstellung zu bringen,
- einer Ausgleichskammer (16), die zwischen dem Ventilsitz (78) und dem Auslaß (17) angeordnet ist,
  wobei das Gehäuse (1, 3) einen Durchgang bzw. Kanal (27, 85) aufweist, der so angeordnet ist, daß zwischen dem Einlaß (12) und der Ausgleichskammer (16) eine eingeschränkte Verbindung besteht, wenn der Ventilkörper (4) zum Schließen des Ventils gegen den Sitz (78) gedrückt wird,
- einem biegsamen Faltenbalg (5), der sich auf der vom Sitz (78) abgewandten Seite des Ventilkörpers (4) zwischen dem Ventilkörper (4) und dem Gehäuse (1, 3) erstreckt, wobei der Faltenbalg mit seinen gegenüberliegenden Enden am Ventilkörper (4) und Gehäuse (1, 3) befestigt ist, so daß eine Faltenbalgkammer (22) gebildet wird,

**gekennzeichnet** durch

a) eine am Gehäuse (1, 3) befestigte, biegsame Membran (2), wobei die Membran und das Gehäuse beiderseits der Membran eine Steuerkammer (14) und eine Druckkammer (13) bilden, die unter dem am Einlaß herrschenden Druck steht, der Haupt-Ventilköper (4) durch eine Steckverbindung (4, 9) an der Membran (2) so angebracht ist, daß er sich zusammen mit dieser zwischen der Öffnungsstellung und der Schließstellung des Ventils hin- und herbewegen läßt, die Membran (2) eine Öffnung (15) aufweist, die zwischen der Steuerkammer (14) und der Druckkammer (13) eine eingeschränkte Verbindung herstellt, die Öffnung (15) klein genug ist, um den Fluß der Flüssigkeit zwischen der Steuerkammer (14) und der Druckkammer (13) so zu verringern, daß die Bewegungsgeschwindigkeit der Membran (2) zwischen der Öffnungsstellung und der Schließstellung des Ventils gesenkt und somit das Auftreten von hydraulischen Stößen eingeschränkt wird,
b) die Faltenbalgkammer (22), die eine effektive Fläche ($A_{ef}$) der Membran (2) begrenzt, die im wesentlichen so groß ist wie die Nennöffnungsfläche ($A_n$) des Ventilsitzes, so daß die vom Faltenbalg (5) begrenzte Fläche der Membran auf einer Seite nicht unter dem in der Steuerkammer (14) herrschenden Druck steht und im wesentlichen so groß ist wie eine Fläche auf der anderen Seite der Membran, die durch den Ventilsitz gegen den Druck am Einlaß abgedichtet ist, und
c) ein Kanalventilelement (29, 38), mit dem sich der Durchgang bzw. Kanal (27, 85) je nach Bedarf selektiv öffnen und schließen läßt.

2. Steuerventil nach Anspruch 1, weiterhin gekennzeichnet durch

a) eine Stange (11), deren inneres Ende mit dem Haupt-Ventilkörper (4) zusammenwirkt, und deren äußeres Ende einen Griff aufweist, wobei die Stange mit dem Gehäuse (1, 3) zusammenwirkt, um die Membran (2) zum Sitz (78) hin- und von diesem wegzubewegen, und
b) das Federmittel (6) zum Andrücken der Membran (2) an den Sitz (78), das sich zwischen dem Gehäuse und dem Haupt-Ventilkörper (4) erstreckt.

3. Steuerventil nach Anspruch 1, weiterhin gekennzeichnet durch

a) eine Ventilspindel (86), die eine zentrale Bohrung aufweist und so angebracht ist, daß sie sich relativ zum Gehäuse bewegen läßt und mit der Membran (2) zusammenwirken kann, und
b) einen Anzeiger (24), der lose in der Bohrung der Ventilspindel (86) sitzt, wobei sein inneres Ende mit der Membran (2) zusammenwirkt und sein äußeres Ende aus der Ventilspindel (86) herausragt, um die Stellung der Membran (2) anzuzeigen.

4. Steuerventil nach Anspruch 1, weiterhin gekennzeichnet durch

a) ein Federmittel (30), das das Kanalventilelement (29) normalerweise in Schließstellung bringt und somit den Durchgang bzw. Kanal (27, 85) schließt, und
b) einen manuell betätigten Griff (34), mit dem sich mittels des Kanalventilelements (29) die Kraft des Federmittels (30) überwinden läßt, um den Durchgang bzw. Kanal (27, 85) zu öffnen.

5. Steuerventil nach Anspruch 1, weiterhin gekennzeichnet durch

a) eine elektrisch betätigte Einrichtung (38), mit dem sich das Kanalventilelement (29) zwischen einer Öffnungsstellung und Schließstellung hin- und herbewegen läßt, um den Durchgang bzw. Kanal (27, 85) je nach Bedarf zu öffnen oder zu schließen.

6. Steuerventil nach Anspruch 1, weiterhin dadurch gekennzeichnet, daß

a) die Kammer (22) im Faltenbalg (5) unter atmosphärischem Druck ($P_0$) steht.

7. Steuerventil mit

- einem Gehäuse (1, 3) mit einem Durchgang bzw. Kanal (10; 27, 85; 45, 46), einem Einlaß (12) und einem Auslaß (17), wobei das Gehäuse außerdem eine Öffnung (26) mit einer Nennöffnungsfläche ($A_s$) aufweist, die von einem Sitz (78) begrenzt wird und zwischen dem Einlaß und dem Auslaß so angeordnet ist, daß sie diese miteinander verbindet,
- einem Haupt-Ventilkörper (4) oder einer Ventilplatte, der bzw. die so angebracht ist, daß er bzw. sie zwischen einer Öffnungsstellung, in der er bzw. sie vom Sitz (78) gelöst ist, und einer Schließstellung, in der er bzw. sie am Sitz anliegt, hin- und herbewegbar ist,
- einem Federmittel (6), das dazu dient, den Ventilkörper (4) in Schließstellung zu bringen,
- einer Ausgleichskammer (16), die zwischen dem Ventilsitz (78) und dem Auslaß (17) angeordnet ist,

- einem biegsamen Faltenbalg (5), der sich auf der vom Sitz (78) abgewandten Seite des Ventilkörpers (4) zwischen dem Ventilkörper (4) und dem Gehäuse (1, 3) erstreckt, wobei der Faltenbalg mit seinen gegenüberliegenden Enden am Ventilkörper (4) und Gehäuse (1, 3) befestigt ist, so daß eine Faltenbalgkammer (22) gebildet wird,

**gekennzeichnet** durch

a) eine am Gehäuse (1, 3) befestigte, biegsame Membran (2), die zusammen mit dem Gehäuse (1, 3) beiderseits der Membran eine Steuerkammer (14) und eine Druckkammer (13) bildet, die unter dem am Einlaß (12) herrschenden Druck steht, wobei der Ventilkörper (4) durch eine Steckverbindung (4, 9) an der Membran (2) so angebracht ist, daß er sich zusammen mit dieser zwischen der Öffnungsstellung und der Schließstellung des Ventils hin- und herbewegen läßt, die Membran (2) eine Öffnung (15) aufweist, die zwischen der Steuerkammer (14) und der Druckkammer (13) eine eingeschränkte Verbindung herstellt, die Öffnung (15) klein genug ist, um den Fluß der Flüssigkeit zwischen der Steuerkammer (14) und der Druckkammer (13) so zu verringern, daß die Bewegungsgeschwindigkeit der Membran (2) gesenkt und somit das Auftreten von hydraulischen Stößen eingeschränkt wird,
b) die Faltenbalgkammer (22), die eine effektive Faltenbalgfläche ($A_{ef}$) aufweist, die durch eine geschlossene Hüllfläche, die etwa in der Mitte zwischen den Innen- und Außenwindungen des Faltenbalgs verläuft, umgeben ist und somit eine effektive Fläche ($A_{ef}$) der Membran begrenzt, die im wesentlichen so groß ist wie die vom Ventilsitz (78) umgebene Nennöffnungsfläche ($A_s$), so daß der vom Faltenbalg (5) begrenzte Teil der Membran (2) nicht unter dem in der Steuerkammer (14) herrschenden Druck steht, und
c) den Durchgang bzw. Kanal (10; 27, 85; 45, 46) des Gehäuses, der die Steuerkammer mit dem Auslaß (17) verbindet, wenn zum Schließen des Ventils die Membran gegen den Ventilsitz (78) gedrückt wird.

8. Steuerventil nach Anspruch 7, weiterhin dadurch gekennzeichnet, daß
a) der Durchgang bzw. Kanal (10, 27, 85) so angeordnet ist, daß die Druckkammer (13) und der Auslaß (17) miteinander verbunden sind, wenn zum Schließen des Ventils die Membran (2) gegen den Sitz (78) gedrückt wird, wobei die Steuerkammer (14) über die Öffnung (15) mit der Druckkammer (13) verbunden ist.

9. Steuerventil nach Anspruch 8, weiterhin gekennzeichnet durch

a) eine zwischen dem Ventilsitz (78) und dem Auslaß (17) angeordnete Ausgleichskammer (16), die mit dem Kanal (27, 85, 45, 46) verbunden ist,
b) ein Kanalventilelement (29, 38), mit dem sich der Kanal je nach Bedarf selektiv öffnen und schließen läßt.

10. Steuerventil nach Anspruch 7, weiterhin gekennzeichnet durch

a) eine Stange (11), deren inneres Ende mit der Membran (2) zusammenwirkt und deren äußeres Ende einen Griff aufweist, wobei die Stange mit dem Gehäuse (1, 3) zusammenwirkt, um die Membran (2) zum Sitz (78) hin- und von diesem wegzubewegen, und
b) das Federmittel (6) zum Andrücken der Membran (2) an den Sitz (78), das sich zwischen dem Gehäuse und der Membran (2) erstreckt.

11. Steuerventil nach Anspruch 7, weiterhin gekennzeichnet durch

a) eine Ventilspindel (86), die eine zentrale Bohrung aufweist und so angebracht ist, daß sie sich relativ zum Gehäuse bewegen läßt und mit der Membran (2) zusammenwirken kann, und
b) einen Anzeiger (24), der lose in der Bohrung der Ventilspindel (86) sitzt, wobei sein inneres Ende an der Membran (2) befestigt ist und sein äußeres Ende aus der Ventilspindel (86) herausragt, um die Stellung der Membran (2) anzuzeigen.

12. Steuerventil nach Anspruch 9, weiterhin gekennzeichnet durch
a) einen manuell betätigten Griff (34), mit dem sich das Kanalventilelement (29) bewegen läßt, um den Durchgang bzw. Kanal (27, 85) je nach Bedarf zu öffnen oder zu schließen.

13. Steuerventil nach Anspruch 9, weiterhin gekennzeichnet durch
a) eine elektrisch betätigte Einrichtung (38), mit dem sich das Kanalventilelement (29) zwischen einer Öffnungsstellung und Schließstellung hin- und herbewegen läßt, um den Durchgang bzw. Kanal (27, 85) je nach Bedarf zu öffnen oder zu schließen.

**14.** Steuerventil nach Anspruch 7, weiterhin dadurch gekennzeichnet, daß

a) der Durchgang bzw. Kanal (45, 46) des Gehäuses (1, 3) so angeordnet ist, daß die Steuerkammer (14) und der Auslaß (17) miteinander verbunden sind, wenn zum Schließen des Ventils die Membran gegen den Sitz (78) gedrückt wird.

**15.** Steuerventil nach Anspruch 14, weiterhin gekennzeichnet durch

a) ein Kanalventilelement (38), mit dem sich der Kanal (45, 46) je nach Bedarf öffnen oder schließen läßt.

**16.** Steuerventil nach Anspruch 7 oder 14, weiterhin dadurch gekennzeichnet, daß

a) das Gehäuse (3) einen Kanal (50, 51) aufweist, der so angeordnet ist, daß er die vom Faltenbalg (5) umgebene Faltenbalgkammer (22) mit der Steuerkammer (14) verbindet, und
b) sich mittels eines Kanalventilelements (49) der Kanal (50, 51) je nach Bedarf öffnen oder schließen und die Verbindung der Faltenbalgkammer (22) mit der Außenluft steuern läßt.

**17.** Steuerventil nach Anspruch 16, weiterhin dadurch gekennzeichnet, daß

a) das Kanalventilelement (49) ein 3/2-Wegeventil ist, dessen einer Weg so angeschlossen ist, daß Flüssigkeit abgelassen werden kann, und dessen beide andere Wege am Kanal (50, 51) angeschlossen sind.

**18.** Steuerventil nach Anspruch 7, weiterhin dadurch gekennzeichnet, daß

a) die Kammer (22) im Faltenbalg (5) unter atmosphärischem Druck ($P_0$) steht.

**Revendications**

**1.** Une vanne de commande présentant : un moyen formant boîtier (1, 3) ayant un orifice d'entrée (12), un orifice de sortie (17) et une ouverture (26) présentant une surface d'ouverture nominale ($A_s$) bordée par un siège (78) et étant disposée entre les orifices d'entrée et de sortie pour assurer une communication entre eux ; un organe formant vanne principale ou plateau de vanne (4) monté pour se déplacer entre une position ouverte éloignée du siège (78) et une position fermée contre le siège ; un moyen élastique (6) pour pousser l'organe formant vanne principale (4) en direction de sa position fermée ; une chambre d'égalisation (16) étant disposée entre le siège (18) de la vanne et l'orifice de sortie (17) ; le moyen formant boîtier (1, 3) présentant des moyens à buse ou à conduit (27, 85) disposés de manière à assurer une communication limitée entre l'orifice d'entrée (12) et la chambre d'égalisation (16) quand l'organe formant vanne (4) est maintenu contre le siège (78) afin de fermer la vanne ; un soufflet souple (5) s'étendant entre l'organe formant vanne (4) et le moyen formant boîtier (1, 3) sur un côté de l'organe formant vanne (4) éloigné du siège (78), le soufflet étant relié de manière étanche, au niveau de ses extrémités opposées, respectivement à l'organe formant vanne (4) et au moyen formant boîtier (1, 3) afin de créer une chambre à soufflet (22), la vanne étant caractérisée par:

(a) un diaphragme souple (2), fixé au moyen formant boîtier (1, 3), le diaphragme et le moyen formant boîtier créant une chambre de commande (14) et une chambre de pression (13) sur des côtés opposés du diaphragme, la chambre de pression étant exposée à la pression au niveau de l'orifice d'entrée, l'organe formant vanne principale (4) étant un connecteur de diaphragme (4,9) monté sur le diaphragme (2) pour se déplacer avec lui entre les positions ouverte et fermée de la vanne, le diaphragme (2) ayant un orifice (15) pour assurer une communication limitée entre la chambre de commande (14) et la chambre de pression (13), l'orifice (15) ayant une dimension suffisante pour réduire l'écoulement de fluide entre la chambre de commande (14) et la chambre de pression (13) de manière à réduire la vitesse de déplacement du diaphragme (2) entre les positions ouverte et fermée de la vanne afin de réduire les risques de coup de bélier,

(b) la chambre à soufflet (22) entourant une surface efficace ($A_{ef}$) du diaphragme (2) essentiellement égale à la dimension de la surface d'ouverture nominale ($A_s$) du siège de la vanne, de manière à isoler une surface du diaphragme, entourée par le soufflet (5), de la pression à l'intérieur de la chambre de commande (14) d'un côté du diaphragme, surface qui est essentiellement égale à une surface du côté opposé du diaphragme isolée, par le siège de vanne, de la pression au niveau de l'orifice d'entrée, et

(c) un organe formant vanne à conduit (29, 38) coopérant avec les moyens à buse ou à conduit (27, 85) pour sélectivement ouvrir et fermer les moyens à buse ou à conduit selon les besoins.

**2.** Une vanne de commande comme revendiquée à la revendication 1, caractérisée en outre par :

(a) une tige (11) présentant une extrémité interne coopérant avec l'organe formant vanne principale (4) et une extrémité externe ayant un moyen à poignée, la tige coopérant avec le moyen formant boîtier (1, 3) pour déplacer le diaphragme (2) par rapport au siège (78), et

(b) les moyens élastiques (6) s'étendant entre le moyen formant boîtier et l'organe formant vanne principale (4) pour pousser le diaphragme (2) contre le siège (78).

3. Une vanne de commande comme revendiquée à la revendication 1, caractérisée en outre par :

(a) une tige de soupape (86) présentant un alésage central et étant montée pour se déplacer par rapport au boîtier afin de coopérer avec le diaphragme (2), et

(b) un indicateur (24) passant le long de l'alésage de la tige de soupape (86) et présentant une extrémité interne coopérant avec le diaphragme (2) et une extrémité externe s'étendant vers l'extérieur de la tige de soupape (86), de manière à indiquer la position du diaphragme (2).

4. Une vanne de commande comme revendiquée à la revendication 1, caractérisée en outre par :

(a) un moyen élastique (30) coopérant avec l'organe formant vanne à conduit (29) de manière à pousser l'organe formant vanne à conduit vers une position normalement fermée, en fermant ainsi les moyens à buse ou à conduit (27 ; 85), et

(b) un moyen à poignée actionné à la main (34) coopérant avec l'organe formant vanne (29) pour surmonter la force du moyen élastique (30) de manière à ouvrir les moyens à buse ou à conduit (27, 85).

5. Une vanne de commande comme revendiquée à la revendication 1, caractérisée en outre par :
(a) un moyen actionné électriquement (38) coopérant avec l'organe formant vanne à conduit (29) de manière à déplacer l'organe formant vanne à conduit (29) entre des positions ouverte et fermée, en ouvrant et fermant ainsi les moyens à buse ou à conduit (27, 85) selon les besoins.

6. Une vanne de commande comme revendiquée à la revendication 1, caractérisée en outre par :
(a) le fait que la chambre (22) à l'intérieur du soufflet (5) est exposée à la pression atmosphérique ($P_o$)

7. Une vanne de commande présentant : un moyen formant boîtier (1, 3) ayant des moyens à buse ou à conduit (10, 27, 85 ; 45, 46), un orifice d'entrée (12) et un orifice de sortie (17), le moyen formant boîtier ayant une ouverture (26) présentant une surface d'ouverture nominale ($A_s$) bordée par un siège (78) et étant disposée entre les orifices d'entrée et de sortie pour assurer une communication entre eux ; un organe formant vanne principale ou plateau de vanne (4) monté pour se déplacer entre une position ouverte éloignée du siège (78) et une position fermée contre le siège ; un moyen élastique (6) pour pousser l'organe formant vanne (4) en direction de sa position fermée ; une chambre d'égalisation (16) étant disposée entre le siège (78) de la vanne et l'orifice de sortie (17) ; un soufflet souple (5) s'étendant entre l'organe formant vanne (4) et le moyen formant boîtier (1, 3) sur un côté de l'élément formant vanne (4) éloigné du siège (78), le soufflet étant relié de manière étanche, au niveau de ses extrémités opposées, respectivement à l'organe formant vanne (4) et au moyen formant boîtier (1, 3) afin de créer une chambre à soufflet (22), la vanne étant caractérisée par :

(a) un diaphragme souple (2), fixé au moyen formant boîtier (1, 3) pour définir, en liaison avec le moyen formant boîtier, une chambre de commande (14) et une chambre de pression (13) sur des côtés opposés du diaphragme, la chambre de pression étant exposée à la pression au niveau de l'orifice d'entrée (12), l'organe formant vanne principale (4) étant un connecteur de diaphragme (4, 9) monté sur le diaphragme (2) pour se déplacer avec lui entre les positions ouverte et fermée de sa vanne, le diaphragme (2) ayant un orifice (15) pour assurer une communication limitée entre la chambre de commande (14) et la chambre de pression (13), l'orifice (15) ayant une dimension suffisante pour réduire l'écoulement de fluide entre la chambre de commande (14) et la chambre de pression (13) de manière à réduire la vitesse du diaphragme (2) afin de réduire les risques de coup de bélier,

(b) la chambre à soufflet (22) présentant une surface de soufflet efficace ($A_{ef}$) définie par une enveloppe fermée passant approximativement à mi-chemin entre des plis internes et externes du soufflet, la chambre à soufflet entourant ainsi une surface efficace ($A_{ef}$) du diaphragme essentiellement égale à la dimension de la surface d'ouverture nominale ($A_s$) bordée par le siège (78) de la vanne, de manière à isoler une portion du diaphragme (2), entourée par le soufflet (5), de la pression à l'intérieur de la chambre de commande (14), et

(c) les moyens à buse ou à conduit (10 ; 27, 85 ; 45, 46) du moyen formant boîtier faisant communiquer la chambre de commande avec l'orifice de sortie (17) lorsque le diaphragme est maintenu contre le siège (78) de la vanne afin de fermer la vanne.

8. Une vanne de commande comme revendiquée à la revendication 7, caractérisée en outre par :

   (a) le fait que les moyens à buse ou à conduit (10, 27, 85) sont disposés de manière à assurer une communication entre la chambre de pression (13) et l'orifice de sortie (17) lorsque le diaphragme (2) est maintenu contre le siège (78) afin de fermer la vanne, la chambre de commande (14) communiquant avec la chambre de pression (13) par l'intermédiaire de l'orifice (15).

9. Une vanne de commande comme revendiquée à la revendication 8, caractérisée en outre par :

   (a) une chambre d'égalisation (16) disposée entre le siège (78) de la vanne et l'orifice de sortie (17), les moyens à conduit (27, 85, 45, 46) communiquant avec la chambre d'égalisation,

   (b) un organe formant vanne à conduit (29, 38) coopérant avec les moyens à conduit pour sélectivement ouvrir et fermer les moyens à conduit selon les besoins.

10. Une vanne de commande comme revendiquée à la revendication 7, caractérisée en outre par :

    (a) une tige (11) présentant une extrémité interne coopérant avec le diaphragme (2) et une extrémité externe ayant un moyen à poignée, la tige coopérant avec le moyen formant boîtier (1, 3) pour déplacer le diaphragme (2) par rapport au siège (78), et

    (b) le fait que le moyen élastique (6) s'étend entre le moyen formant boîtier et le diaphragme (2) pour pousser le diaphragme (2) contre le siège (78).

11. Une vanne de commande comme revendiquée à la revendication 7, caractérisée en outre par :

    (a) une tige de soupape (86) présentant un alésage central et étant montée pour se déplacer par rapport au boîtier afin de coopérer avec le diaphragme (2), et

    (b) un indicateur (24) passant le long de l'alésage de la tige de soupape (86) et présentant une extrémité interne fixée au diaphragme (2) et une extrémité externe s'étendant vers l'extérieur de la tige de soupape (86), de manière à indiquer la position du diaphragme (2).

12. Une vanne de commande comme revendiquée à la revendication 9, caractérisée en outre par :

    (a) un moyen à poignée actionné à la main (34) coopérant avec l'organe formant vanne à conduit (29) pour déplacer l'organe formant vanne à conduit de manière à ouvrir ou fermer les moyens à buse ou à conduit (27, 85) selon les besoins.

13. Une vanne de commande comme revendiquée à la revendication 9, caractérisée en outre par :

    (a) un moyen actionné électriquement (38) coopérant avec l'organe formant vanne à conduit (29) de manière à déplacer l'organe formant vanne à conduit (29) entre des positions ouverte et fermée, en ouvrant et fermant ainsi les moyens à buse ou à conduit (27, 85) selon les besoins.

14. Une vanne de commande comme revendiquée à la revendication 7, caractérisée en outre par :

    (a) le fait que les moyens à buse ou à conduit (45, 46) du moyen formant boîtier (1, 3) sont disposés de manière à assurer une communication entre la chambre de commande (14) et l'orifice de sortie (17) lorsque le diaphragme est maintenu contre le siège (78) pour fermer la vanne.

15. Une vanne de commande comme revendiquée à la revendication 14, caractérisée en outre par :

    (a) un organe formant vanne à conduit (38) coopérant avec les moyens à conduit (45, 46) pour ouvrir et fermer les moyens à conduit (45, 46) selon les besoins.

16. Une vanne de commande comme revendiquée à la revendication 7 ou 14, caractérisée en outre par :

    (a) le fait que le moyen formant boîtier (3) incorpore des moyens à conduit (50, 51), les moyens à conduit étant disposés de manière à assurer une communication entre la chambre à soufflet (22) à l'intérieur du soufflet (5) et la chambre de commande (14), et

    (b) un organe formant vanne à conduit (49) coopérant avec les moyens à conduit (50, 51) de manière à ouvrir et fermer les moyens à conduit (50, 51) selon les besoins et pour commander l'exposition de la chambre à soufflet (22) à l'atmosphère.

17. Une vanne de commande comme revendiquée à la revendication 16, caractérisée en outre par :

    (a) le fait que la vanne à conduit (49) est une vanne trois voies à deux positions, la vanne ayant une voie reliée à un fluide d'évacuation et les deux voies restantes reliées aux moyens à conduit (50, 51).

18. Une vanne de commande comme revendiquée à la revendication 7, caractérisée en outre par :

    (a) le fait que la chambre (22) à l'intérieur du soufflet (5) est exposée à la pression atmosphérique ($P_o$).

FIG. 1

$$A_{ef} = A_s$$

$$F_{rez} = F_{iz} - (F_f + F_b + F_o) = 0$$

FIG. 2

FIG. 3

FIG. 4

FIG. 5a

FIG. 5b

FIG. 6

FIG. 7